# EUROPÄISCHE PATENTSCHRIFT

(11) **EP 0 372 367 B1**
(45) Veröffentlichungstag und Bekanntmachung des Hinweises auf die Patenterteilung: **02.02.1994**
(21) Anmeldenummer: 89122003.0
(22) Anmeldetag: 29.11.1989
(51) Int. Cl.: F16H 39/10

(54) **Hydrostatisches Getriebe**
Hydrostatic transmission
Transmission hydrostatique

(30) Priorität: 08.12.1988 DE 3841382
(43) Veröffentlichungstag der Anmeldung: 13.06.1990
(73) Patentinhaber: Hydromatik GmbH, 89275 Elchingen (DE)
(72) Erfinder: Stölzer, Rainer, D-7900 Ulm (DE)
(74) Vertreter: Körber, Wolfhart, Dr.rer.nat.

(56) Entgegenhaltungen:
- DE-A- 1 425 806
- DE-A- 1 500 457
- DE-A- 2 334 029
- DE-A- 3 724 967
- FR-A- 1 180 164

## Beschreibung

Die Erfindung bezieht sich auf ein hydrostatisches Getriebe nach dem Oberbegriff des Anspruchs 1.

Ein hydrostatisches Getriebe dieser Bauart ist allgemein bekannt und findet in vielen technischen Bereichen seine Anwendung. Dabei ist es bei Verwendung von Axialkolben-Maschinen üblich, den Axialkolben-Motor von der Axialkolben-Pumpe entfernt anzuordnen und durch Leitungen im offenen oder geschlossenen Kreislauf mit der Axialkolben-Pumpe zu verbinden. Auf diese Weise läßt sich unabhängig vom Anbringungsort der Axialkolben-Pumpe und des Axialkolben-Motors eine einfache Antriebsverbindung schaffen, wobei je nach Ausbildung der Pumpe und des Motors gleichzeitig ein Getriebe mit einem vorbestimmbaren Übersetzungsverhältnis geschaffen werden kann.

Es gibt jedoch auch Anwendungsfälle, bei denen eine getrennte Anordnung der Pumpe und des Motors nicht erwünscht oder nicht möglich ist, z.B. für insbesondere stufenlose Getriebe von Kleinfahrzeugen, wie z.B. Rasenmäher, Kommunalfahrzeuge und dergleichen. Auch zur Drehzahlanpassung von Nebenaggregaten an Verbrennungsmotoren sind ebenfalls keine langen Verbindungswege erwünscht. Das gleiche gilt auch insbesondere zur Drehzahlspreizung von Elektromotoren, die mit den von ihnen angetriebenen Aggregaten in beengten Raumverhältnissen anzuordnen sind.

Der Erfindung liegt die Aufgabe zugrunde, ein hydrostatisches Getriebe der eingangs bezeichneten Art so auszugestalten, daß eine kleine, kompakte Bauweise möglich ist.

Diese Aufgabe wird durch die kennzeichnenden Merkmale des Anspruchs 1 gelöst.

Bei der erfindungsgemäßen Ausgestaltung sind die Pumpe und der Motor in einem Gehäuse angeordnet, wobei aufgrund der wenigstens teilweisen Aufnahme der drehbaren Zylindertrommel des Motors in eine Ausnehmung des Zylinderblocks der Pumpe die angestrebte kompakte Bauweise erreicht wird. Die erfindungsgemäße Ausgestaltung eignet sich auch für Kolbenmaschinen anderer Bauart, wie Radialkolben-Maschinen.

In den Unteransprüchen sind vorteilhafte Weiterbildungen der Erfindung beschrieben, die ebenfalls zur Lösung der Aufgabe beitragen und sich außerdem durch eine einfache, montagefreundliche und/oder kostengünstig herstellbare Bauweise sowie vorteilhafter Abdichtung und einfacher Steuerung bei sicherer Funktion und hoher Lebensdauer auszeichnen.

Nachfolgend wird die Erfindung anhand eines in einer vereinfachten Zeichnung dargestellten bevorzugten Ausführungsbeispiels näher erläutert. Es zeigt:
- Fig. 1: ein erfindungsgemäß ausgestaltetes hydrostatisches Getriebe im axialen Längsschnitt;
- Fig. 2: den Schnitt A-A in Fig. 1;
- Fig. 3: den Schnitt B-B in Fig. 1;
- Fig. 4: ein erfindungsgemäß ausgestaltetes hydrostatisches Getriebe im axial Längsschnitt als zweites Ausführungsbeispiel.

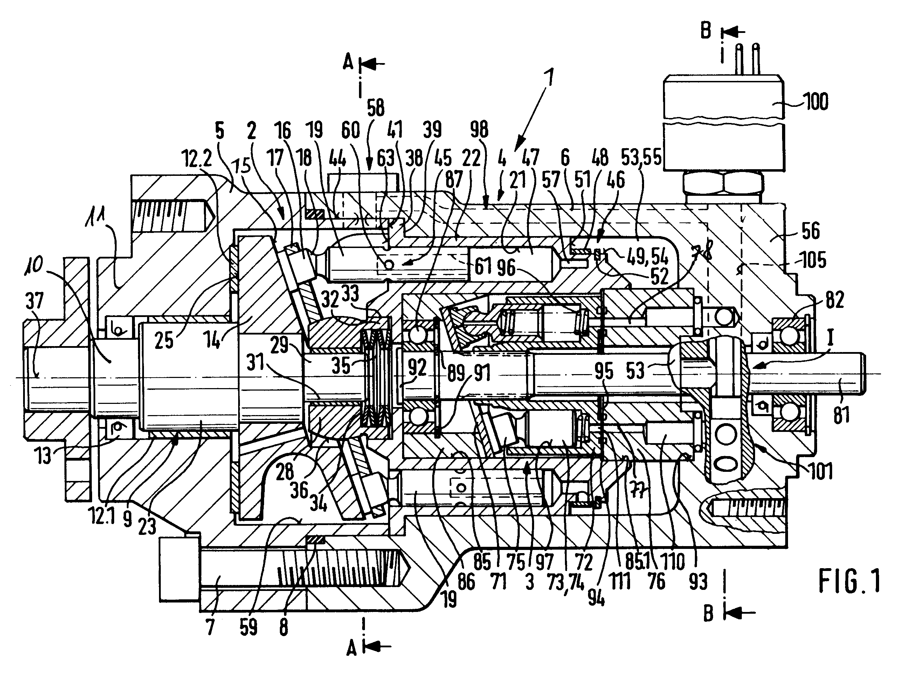

Bei dem allgemein mit 1 bezeichneten hydrostatischen Getriebe sind eine Axialkolben-Pumpe 2 und ein Axialkolben-Motor 3 in ein gemeinsames Gehäuse 4 integriert, bestehend aus zwei topfförmigen Gehäuseteilen 5,6, die im Bereich ihrer freien Ränder zusammengesetzt und mittels Schrauben 7 miteinander verschraubt und mittels einer Dichtung 8 abgedichtet sind. In Fig. 1 ist eine Schraube 7 dargestellt.

Die wesentlichen Teile der Pumpe 2 sind eine axial im Gehäuse 4 gelagerte Antriebswelle 9, deren äußerer Wellenteil 10 die Stirnwand 11 des Gehäuseteils 5 durchfaßt und darin mittels einem allgemein mit 12 bezeichneten Gleitlager nebst einer Dichtung 13 gelagert ist, einer auf der Antriebswelle 9 drehfest angeordneten Schiefscheibe 14, anderen Schieffläche 15 in ansich bekannter Weise Gleitschuhe 16 mittels einer von den Gleitschuhen 16 durchfaßten Rückhalteplatte 17 anliegen, in denen kugelförmige Köpfe 18 von auf einem Teilkreis angeordneten axialen Kolben 19 sphärisch gelagert sind, die in axialen Kolbenbohrungen 21 eines stationär im Gehäuse 4 gelagerten Zylinderblocks 22 axial verschiebblich gelagert sind.

Das Gleitlager 12 umfaßt ein Radiallager 12.1 für einen zwischen der Dichtung 13 und der Schiefscheibe 14 sich erstreckenden Wellenabschnitt 23 und ein Axiallager 12.2, bestehend aus einer radialen Innenschulterfläche am Gehäuseteil 5 und der der Schieffläche 15 abgewandten Radialfläche 25 der Schiefscheibe 14. Zwischen den radialen und axialen Gleitflächen sind Gleitschichten aus einem Lagermetall angeordnet und vorzugsweise am Gehäuseteil 5 befestigt.

Das innere Ende der Antriebswelle 9 ist beim vorliegenden Ausführungsbeispiel mittels eines kugelförmigen Lagerteils 28 im Zylinderblock 22 radial gelagert. Der Lagerzapfen 29 der Antriebswelle 9 ist in einem im Lagerteil 28 vorgesehenen Lager, insbesondere Gleitlager 31 gelagert, wobei ein der Schiefscheibe 14 abgewandter zylindrischer Lagerfuß 32 des Lagerteils 28 schließend in einer angepaßten stirnseitigen Ausnehmung 33 des Zylinderblocks 22 eingesetzt ist. Auf der gleichen Seite ist in einer inneren Ausnehmung 34 des Lagerteils 28 wenigstens eine Federscheibe, vorzugsweise ein Federscheibenpaket 35 angeordnet, mittels dessen das Lagerteil 28 mit der auf dessen kugelförmiger Lagerfläche 36 schwenkbar gelagerten Rückhalteplatte 17 mit den Gleitschuhen 16 gegen die Schieffläche 15 vorgespannt ist. Der Lagerzapfen 29 ist vorzugsweise so angeordnet, daß eine durch die Köpfe 18 der Kolben 19 gehende Ebene die Längsmittelachse 37 des hydrostatischen Getriebes 1 in einem sich im Bereich des Lagerzapfens 29 befindlichen Punkt schneidet.

Der Zylinderblock 22 ist mittels eines Flansches 38 zwischen einer Innenschulterfläche 39 am Gehäuseteil 6 und einer Schulterfläche 41 am freien Ende des Gehäuseteils 5 axial unverschieblich aufgenommen, wobei das freie Ende des Gehäuseteils 6 das freie Ende des Gehäuseteils 5 in einer äußeren Ringausnehmung 44 übergreift, in der die Dichtung 8 angeordnet ist.

Die Pumpe 2 ist ventilgesteuert und somit drehrichtungsunabhängig. Hierzu dienen allgemein mit 45 und 46 bezeichnete Einlaßventile und Auslaßventile für die Zylinder 47, von denen die Auslaßventile 46 ein gemeinsames Schließglied in Form eines Flachringes (ventilring) 48 aus elastisch biegbarem, jedoch nicht dehnbarem Material aufweisen. Der Flachring 48 ist mit einem gewissen radialen und seitlichem Spiel auf einer zylindrischen Außenfläche am der Schiefscheibe 14 abgewandten Ende des Zylinderblocks 22 zwischen einer Schulterfläche 51 des vorhandenen Rücksprungs und einem in die zylindrische Außenfläche 49 eingesetzten Sicherungsring 52 eingesetzt. Die Auslaßventile 46 speisen in einen gemeinsamen Druckraum 53, der durch den vorgenannten radialen rücksprung 54 und einem Freiraum 55 zur Pulsationsdämpfung zwischen den Zylinderblock 22 und der Stirnwand 56 des Gehäuseteils 6 angeordnet ist. In der zylindrischen Außenfläche 49 münden die von den Zylindern 47 ausgehenden Auslaßkanäle 57 mit zunächst axialen und dann radialen Kanalabschnitten.

Nahe oder im Bereich der Teilungsfuge der Gehäuseteile 5,6, hier im Überlappungsbereich ist ein Sauganschluß 58, hier am Gehäuseteil 6 vorgesehen, der in den Gehäuseraum 59 der Pumpe 2 mündet. Jedes Einlaßventil wird durch eine vom jeweiligen Arbeitsraum innerhalb jedes Kolbens 19 verlaufende und radial an einer bestimmten Stelle des Kolbenmantels austretende Kanalverbindung, bestehend aus einem radialen Loch 60 und einem axialen Kanal, gebildet. Die Anordnung ist so getroffen, daß das Loch 62 in der zurückgezogenen Position des zugehörigen Kolbens 19 zum Gehäuseraum 59 freiliegt, jedoch in der vorgeschobenen Position des zugehörigen Kolbens 19 von der Wand bzw. Kante 63 der zugehörigen Kolbenbohrung 21 abgedeckt ist. Der Abstand des Lochs 62 in dessen zurückgezogener Position vom Rand bzw. von der Kante 63 der zugehörigen Kolbenbohrung 21 ist an die funktionellen Anforderungen so anzupassen, daß im zugehörigen Zylinder 47 in ansich bekannter Weise das hydraulische Medium, vorzugsweise Ö1, aus dem Gehäuseraum 59 angesaugt und im Zylinder 47 verdichtet werden kann. In dieser zurückgezogenen Position des Kolbens 19 erfolgt das Füllen des zugehörigen Zylinders 47 aus dem Gehäuseraum 59. Vorzugsweise sind vier radiale Löcher 62 auf dem Umfang verteilt vorgesehen. Der an der Stirnseite des Kolbens 19 ausmündende Kanal 61 kann durch einen Hohlkolben gebildet sein.

Insoweit entspricht die vorbeschriebene Ausgestaltung einer in der älteren EP-A- 301230, veröffentlicht am 01/02/89, der Anmelderin beschriebenen und dargestellten Ausgestaltung. Auf jene Ausgestaltung wird in vollem Umfang Bezug genommen.

Die wesentlichen Teile des Motors 3 sind eine zweite Schiefscheibe 71, eine drehbare Zylindertrommel 72 mit auf einem Teilkreis angeordneten Kolbenbohrungen 73, wobei die darin axial verschiebbar aufgenommenen Kolben 74 über sphärische Kolbenköpfe und darauf gelagerten Gleitschuhen 75 an der Schiefscheibe 71 anliegen, und ein plattenförmiges Steuerteil 76 mit nicht dargestellten, ansich bekannten nierenförmigen Steuerschlitzen sowie von diesen ausgehenden axialen Einlaß- bzw. Auslaßkanälen 77,78, von denen sich der Auslaßkanal 78 durch die Stirnwand 56 des Gehäuseteils 6 nach außen zu einem Druckleitungsanschluß erstreckt.

Außerdem gehört zu den wesentlichen Teilen eine Abtriebswelle 81, auf der die Zylindertrommel 72 drehfest angeordnet ist, und die das Steuerteil 76 und die Stirnwand 56 in Ausschnitten zur zugeordneten Stirnseite des Gehäuses 4 hin durchfaßt und an seinem äußeren Ende durch ein Lager 82 an der Stirnwand 56 des Gehäuseteils 6 gelagert ist.

Der Zylinderblock 22 ist durch eine zentrale, zur der ersten Schiefscheibe 14 abgewandten Seite hin offene Ausnehmung 85 hohl bzw. topfförmig ausgebildet. In dieser Ausnehmung 85 sind wenigstens teilweise die wesentlichen Teile des Motors 3 aufgenommen. Im einzelnen ist die zweite Schiefscheibe 71 auf der der ersten Schiefscheibe 14 zugewandten Seite der Zylindertrommel 72 angeordnet und an einem Stützteil 86 in unveränderlicher Schrägposition abgestützt, das am Grund der Ausnehmung 85 angeordnet ist und innenseitig ein Wälzlager 87 für das innere Ende 88 der Abtriebswelle 81 trägt. Das Wälzlager 87 ist durch zwei Sicherungsringe 89,91 und eine am inneren Ende der Abtriebswelle 81 vorhandene Schulter 92 axial auf der Abtriebswelle 81 und im Stützteil 86 bzw. im Zylinderblock 22 axial gesichert. Beim vorliegenden Ausführungsbeispiel ist somit die Zylindertrommel 72 auf der der Pumpe 2 abgewandten Seite der zweiten Schiefscheibe 71 und dabei ebenfalls in der Ausnehmung 85 angeordnet.

Das Steuerteil **76** ist an der ihm zugewandten Seite der Stirnwand 56 des Gehäuseteils 6 undrehbar gelagert. Dabei ist das im Querschnitt vorzugsweise runde Steuerteil 86 schließend in eine entsprechend bemessene Ausnehmung in der Stirnwand 56 eingesetzt, wodurch das Steuerteil 86 auch radial zentriert ist. Es ist von Vorteil, das Steuerteil 86 auf seiner anderen Seite am Zylinderblock 22 axial abzustützen, so daß es keiner besonderen Befestigungselemente zu seiner Befestigung an der Stirnwand 56 bedarf. Beim vorliegenden Ausführungsbeispiel ist das Steuerteil **76** am Zylinderblock 22 nicht nur axial, sondern auch radial abgestützt, wobei es über einen Teil seiner Länge in einen im Querschnitt erweiterten Ausnehmungsabschnitt 85.1 ebenfalls schließend eingesetzt ist und axial an der Erweiterungsschulter 94 anliegt. Die Abdichtung der Einlaß- und Auslaßkanäle 77,78 erfolgt durch Ringdichtungen, die in besonderen Ausnehmungen am Boden der Ausnehmung 93 angeordnet sind.

Die Zylindertrommel 72 liegt an der Steuerfläche 95 des Steuerteils **76** an, was zum einen durch den Arbeitsdruck und zum anderen durch Druckfedern 96 gewährleistet ist, die zwischen den Kolben 74 und dem Grund der Zylinder 97 eingespannt sind, wobei sie in die als Hohlkolben ausgebildeten Kolben 74 einfassen. Durch die gleichen Kräfte sind auch die Kolben 74 mit den Gleitschuhen 75 gegen die Schiefscheibe 71 beaufschlagt

Beim Ausführungsbeispiel gemäß Fig. 1 bis 3 ist das hydrostatische Getriebe 1 für den Betrieb im geschlossenen Kreislauf eingerichtet, wobei die vom Motor 3 abgegebene Hydraulikflüssigkeit durch die in die Einlaßleitung mündende Rückführungsleitung 98 der Pumpe 2 wieder zugeführt wird.

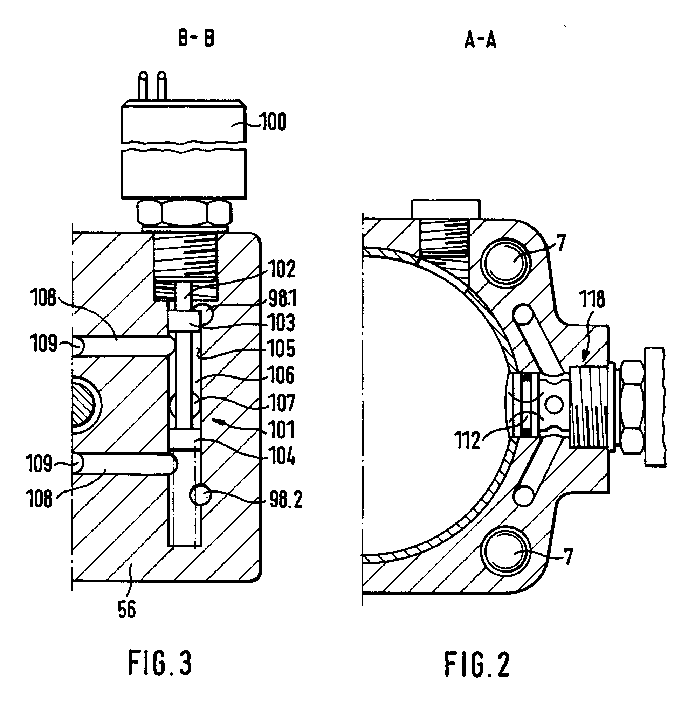

Beim vorliegenden Ausführungsbeispiel ist ein allgemein mit 101 bezeichnetes Wechsel- bzw. Umsteuerventil vorgesehen, mit dem die Kanäle 77,78 des Motors 3 wahlweise mit dem Druckraum 53 oder der in Fig. 1 angedeuteten Rückführungsleitung 98 verbunden werden können. Hierdurch läßt sich die Drehrichtung des Motors 3 wahlweise bestimmen. Das Umsteuerventil 101 weist eine durch einen Elektromagneten 100 angetriebene, beim vorliegenden Ausführungsbeispiel quer zur Längsmittelachse 37 in der Stirnwand 56 längs verschiebbar gelagerte Steuerstange 102 mit zwei in einem Abstand voneinander angeordneten, jeweils durch zwei Steuerkanten begrenzte Steuerabschnitte bzw. Steuerkolben 103,104 auf, von denen - wie in Fig. 3 gezeigt - in der einen Endstellung der Steuerstange 102 der Steuerkolben 103 den Durchgang vom Druckraum 53 zum Motor 3 freigibt und den Durchgang vom Motor 3 zum Rückführungskanal 98 sperrt, während der andere Steuerkolben 104 den Durchgang vom Druckraum 53 zum Motor 3 sperrt und den Durchgang vom Motor 3 zum Rückführungskanal 98 öffnet. In der in Fig. 3 nicht dargestellten anderen (unteren) Endstellung der Steuerstange 102 wird durch den Steuerkolben 103 der Durhgang vom Druckraum 53 zum Motor 3 gesperrt und der Durchgang vom Motor 3 zum Rückführungskanal 98 geöffnet sowie durch den Steuerkolben 104 der Durchgang vom Druckraum 53 zum Motor 3 geöffnet und der Durchgang vom Motor 3 zum Rückführungskanal 98 gesperrt.

Beim vorliegenden Ausführungsbeispiel sind zwei sich in einem Abstand voneinander erstreckende Rückführungskanalzweige 98.1,98.2 vorgesehen, die durch Querkanäle 99.1,99.2 mit dem allgemein mit 58 bezeichneten Sauganschluß bzw. Einlaß verbunden sind.

Im folgenden wird die Funktion des Ausführungsbeispiels gemäß Fig. 1 bis 3 beschrieben, wobei bezüglich des in Fig. 1 dargestellten Teilschnittes I zu bemerken ist, daß dieser tiefer als die Zeichnungsebene liegt, nämlich die außermittig versetzt angeordnete Steuerstange 102 schneidet. Deshalb ist ein sich zwischen dem Druckraum 53 und der Führungsbohrung 105 der Steuerstange 102 erstreckender sowie in den Ringraum 106 zwischen den Steuerkolben 103,104 mündender Druckkanal 107 im Teilschnitt I in Fig. 1 sichtbar dargestellt ist. Bei der in Fig. 3 dargestellten Stellung der Steuerstange 102 gelangt die Druckflüssigkeit durch den Druckkanal 107, den Ringkanal 106, einen sich quer erstreckenden Kanalabschnitt 108, den sich längs in der Stirnwand 56 erstreckenden Kanalabschnitt 109, den sich längs im Steuerteil **76** erstreckenden Kanalabschnitt 110 und nach Passieren der nicht dargestellten Steuerkanten durch die sich längs im Boden der Zylinder 97 der Druckseite erstreckenden Kanalabschnitte in die betreffenden Zylinder, wodurch aufgrund der vorhandenen Neigung der Schiefscheibe 71 und der Kolbenkräfte die Zylindertrommel 72 gedreht wird. Die von den Zylindern 97 der Niederdruckseite ausgestoßenen Hydraulikflüssigkeit gelangt durch entsprechende Kanalabschnitte durch die freie Führungsbohrung 105 und den Rückführungskanal 98.2 zum Saug- bzw. Gehäuseraum 59. In der anderen Endstellung der Steuerstange 102, nämlich in der in Fig. 3 angedeuteten (unteren) Stellung, wird die andere Funktionsseite des Motors 3 mit Druckflüssigkeit beaufschlagt, während die vom Motor 3 durch die Kanalabschnitte 108 bis 111 abgegebene Hydraulikflüssigkeit dem Rückführungskanal 98.1 zugeführt wird.

Beim vorliegenden Ausführungsbeispiel ist in der Einlaßleitung in Strömungsrichtung hinter der Mündung der Rückführungskanäle 98,98.1,98.2 eine in Fig. 2 angedeutete verstellbare Drossel 112 angeordnet, mittels der die Abtriebsdrehzahl durch Saugstromdrosselung geregelt werden kann.

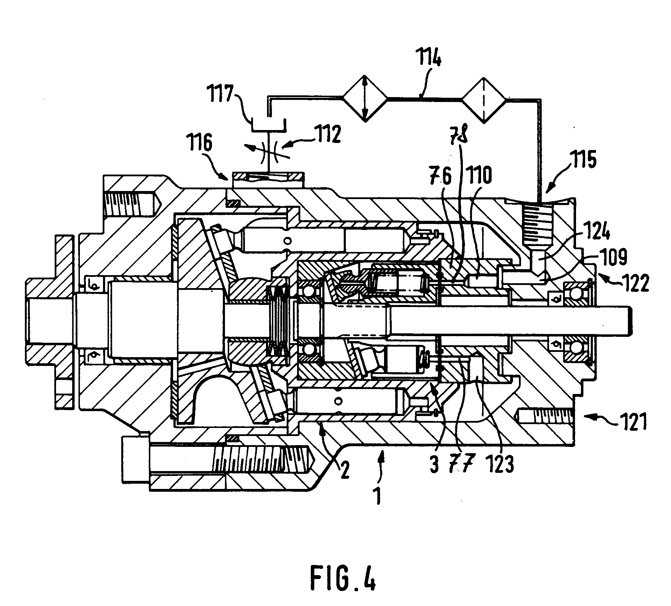

Das Ausführungsbeispiel gemäß Fig. 4 unterscheidet sich vom vorbeschriebenen Ausführungsbeispiel zum einen dadurch, daß ein Umsteuerventil 101 nicht vorhanden sowie das hydrostatische Getriebe 1 für die Funktion im offenen Kreislauf eingerichtet ist und der Rücklauf nicht durch in der Wand des Gehäuses 4 verlaufende Kanäle, sondern durch eine Außenleitung 114 erfolgt, die sich von einem Auslaßanschluß 115 zum Einlaßanschluß 116 unter Zwischenschaltung eines offenen Tanks 117 erstreckt. Bei diesem Ausführungsbeispiel kann die verstellbare Drossel 112 in der Einlaßleitung zwischen dem Tank 117 und dem Einlaßanschluß 116 angeordnet oder wie auch schon beim vorbeschriebenen Ausführungsbeispiel gemäß Fig. 2 durch ein Einschraubventil 118 gebildet sein.

Aufgrund des Fortfalls des Umsteuerventils 101 können die zum und vom Motor 3 führenden Kanalabschnitte einfacher ausgestaltet werden. Bei diesem Ausführungsbeispiel ist die Druckseite 121 des Motors 3 durch einen radial im Steuerteil **76** ausmündenden Zuführungskanalabschnitt 123 gebildet, von dem der Kanalabschnitt 110 ausgeht. Auf der Niederdruckseite führt vom Abführungskanalabschnitt 109 ein radialer Kanalabschnitt 124 zum Auslaßanschluß 115.

## Patentansprüche

1. Hydrostatisches Getriebe (1) mit einer ventilgesteuerten Kolben-Pumpe, insbesondere Axialkolben-Pumpe (2), der in einem Gehäuse (4) ein durch eine Antriebswelle (9) drehangetriebenes Antriebsteil (14) sowie ein stationärer Zylinderblock (22) mit Kolben (19) zugeordnet ist, und mit einem durch wenigstens eine hydraulische Leitung (98) mit der Pumpe (2) verbundenen Kolben-Motor, insbesondere Axialkolben-Motor (3),
dadurch gekennzeichnet,
daß der Motor (3) ein undrehbares Antriebsteil (71) sowie eine drehbare Zylindertrommel (72) aufweist und in das Gehäuse (4) auf der dem Antriebsteil (14) der Pumpe (2) gegenüberliegenden Seite integriert ist, wobei die Zylindertrommel (72) drehfest auf einer Abtriebswelle (81) gelagert und wenigstens teilweise in einer Ausnehmung (85) des Zylinderblocks (22) der Pumpe (2) angeordnet ist.

2. Hydrostatisches Getriebe nach Anspruch 1,
dadurch gekennzeichnet,
daß der Motor (3) ein Axialkolben-Motor mit einer Schiefscheibe (71) ist, deren Neigung unveränderlich ist.

3. Hydrostatisches Getriebe nach Anspruch 2,
dadurch gekennzeichnet,
daß die Schiefscheibe (71) des Motors (3) in den Grund der Ausnehmung (85) eingesetzt ist und ein Steuerteil (76) des Motors (3) an der abtriebsseitigen Stirnwand (56) des Gehäuses (4) angeordnet ist.

4. Hydrostatisches Getriebe nach Anspruch 3,
dadurch gekennzeichnet,
daß die Schiefscheibe (71) des Motors (3) eine im wesentlichen parallele Platte ist, die in einem an einem im Grund der Ausnehmung (85) eingesetzten Stützteil (86) ausgebildeten Sattel eingesetzt ist.

5. Hydrostatisches Getriebe nach Anspruch 3 oder 4,
dadurch gekennzeichnet,
daß das Steuerteil (76) axial zwischen der abtriebsseitigen Stirnwand (56) des Gehäuses (4) und einer Schulterfläche (94) des Zylinderblocks (22) axial begrenzt ist.

6. Hydrostatisches Getriebe nach einem der Ansprüche 3 - bis 5,
dadurch gekennzeichnet,
daß das Steuerteil (76) an einer Innenumfangsfläche des Zylinderblocks (22) radial abgestützt ist.

7. Hydrostatisches Getriebe nach Anspruch 5 oder 6,
dadurch gekennzeichnet,
daß das Steuerteil (76) wenigstens mit einem Abschnitt seiner Breite in die Ausnehmung (85) im Zylinderblock (22) einfaßt.

8. Hydrostatisches Getriebe nach einem der Ansprüche 1 bis 7,
dadurch gekennzeichnet,
daß das innere Ende der Abtriebswelle (81) im Zylinderblock (22) gelagert ist.

9. Hydrostatisches Getriebe nach einem der Ansprüche 1 bis 8,
dadurch gekennzeichnet,
daß als der Druckraum (53) der Pumpe (2) ein zwischen der abtriebsseitigen Stirnwand (56) und dem Zylinderblock (22) vorhandener Freiraum (55) dient.

10. Hydrostatisches Getriebe nach einem der Ansprüche 1 bis 9,
dadurch gekennzeichnet,
daß das Gehäuse (4) aus zwei topfförmigen, aneinander zentrierten Gehäuseteilen (5,6) gebildet ist.

11. Hydrostatisches Getriebe nach Anspruch 10,
dadurch gekennzeichnet,
daß der Zylinderblock (22) einen Flansch (38) aufweist, mit dem er zwischen den Gehäuseteilen (5,6) axial gehalten ist.

12. Hydrostatisches Getriebe nach einem der Ansprüche 1 bis 11,
dadurch gekennzeichnet,
daß eine Zuführungsleitung zum Motor (3) durch einen vom Druckraum (53) ausgehenden radialen Kanalabschnitt (123) und einen sich im Steuerteil (76) axial zu den Steuerschlitzen erstreckenden Kanalabschnitt (110) gebildet ist, und eine Abführungsleitung sich axial durch das Steuerteil (76) in die abtriebsseitige Stirnwand (56) und dann zu einer Rückführungsleitung (114) erstreckt.

13. Hydrostatisches Getriebe nach Anspruch 12,
dadurch gekennzeichnet,
daß die Rückführungsleitung durch einen oder zwei sich in der Wand des Gehäuses (4) erstreckenden Rückführungskanal (98,98.1,98.2) gebildet ist.

14. Hydrostatisches Getriebe nach inem der Ansprüche 1 bis 13,
dadurch gekennzeichnet,
daß die Zu- und Abführungsleitungen des Motors (3) durch ein Wechsel- oder Umschaltventil (101) jeweils wahlweise mit dem Druckraum (53) oder entweder einem zur Pumpe (2) führenden Rückführungskanal (98,98.1,98.2) oder einem Tank (117) verbindbar sind.

15. Hydrostatisches Getriebe nach Anspruch 14,
dadurch gekennzeichnet,
daß das Umschaltventil (101) einen Kolbenschieber (102) mit vorzugsweise zwei Steuerkolben (103,104) aufweist, der in einer sich quer und in einem Abstand von der Längsmittelachse (37) des Gehäuses (4) in dessen abtriebsseitiger Stirnwand (56) erstreckenden Führungsbohrung (105) verschiebbar ist, die im Bereich zwischen den Steuerkolben (103,104) durch einen Kanal (107) mit dem Druckraum (53) oder mit zu beiden Seiten dieses Kanals (107) mit jeweils einer Zuführungs- bzw. Abführungsleitung (108) und einem Rückführungskanal (98.1,98.2) verbindbar ist.

16. Hydrostatisches Getriebe nach Ansprüche 1 bis 15,
dadurch gekennzeichnet,
daß in der Zuführungsleitung (58,114) der Pumpe (2) oder in dem den Motor (3) mit der Pumpe (2) verbindenden Rückführungskanal (98,98.1,98.2) eine verstellbare Drossel (112) angeordnet ist.

17. Hydrostatisches Getriebe nach Anspruch 16,
dadurch gekennzeichnet,
daß die verstellbare Drossel (112) Teil eines Einschraubventil oder einer Einschraubpatrone ist.

18. Hydrostatisches Getriebe nach einem der Ansprüche 1 bis 17,
dadurch gekennzeichnet,
daß die Einlaßventile (45) der Pumpe (2) jeweils durch einen von der Stirnfläche des zugehörigen Kolbens (19) sich in diesem zunächst axial und dann radial velaufenden Kanal gebildet sind, der in der zurückgezogenen Endstellung des Kolbens (19) außerhalb der Wand der Kolbenbohrung (21) mündet.

19. Hydrostatisches Getriebe nach einem der Ansprüche 1 bis 18,
dadurch gekennzeichnet,
daß die Auslaßventile (46) jeweils durch einen vom zugehörigen Zylinder (47) ausgehenden, radial an einer zylindrischen Fläche (49) austretenden Kanal (57) gebildet sind, wobei innerhalb oder außerhalb der zylindrischen Fläche (49) ein nicht dehnbarer, jedoch elastisch biegsamer flacher Ventilring (48) mit radialem Spiel angeordnet ist.

20. Hydrostatisches Getriebe nach Anspruch 19,
dadurch gekennzeichnt,
daß die zylindrische Fläche (49) eine in einem radialen Abstand von der Innenwand des Gehäuses (4) angeordnete Stufenaußenfläche ist und der Ventilring (48) mit seitlichem Bewegungs- und Durchgangsspiel zwischen der Stufenfläche durch ein in die zylindrische Außenfläche (49) eingesetztes Sicherungselement (52) axial gehalten ist.

## Claims

1. A hydrostatic transmission (1) comprising a valve-controlled piston pump, in particular an axial piston pump (2), with which there is associated in a housing (4) a drive part (14) rotatably driven by a drive shaft (9) and a stationary cylinder block (22) with pistons (19), and comprising a piston motor, in particular an axial piston motor (3), that is connected to the pump (2) by at least one hydraulic line (98),
characterised in that,
the motor (3) has a non-rotatable drive part (71) and a rotatable cylinder drum (72) and is integrated in the housing (4) on the side opposite to the drive part (14) of the pump (2), the cylinder drum (72) being fixed non-rotatably on an output shaft (81) and being arranged at least partly in a recess (85) in the cylinder block (22) of the pump (2).

2. A hydrostatic transmission according to claim 1,
characterised in that,
the motor (3) is an axial piston motor having a swash plate (71) with a fixed angle of inclination.

3. A hydrostatic transmission according to claim 2,
characterised in that,
the swash plate (71) of the motor (3) is inserted in the base of the recess (85) and a control part (76) of the motor (3) is arranged on the end wall (56) of the housing (4) on the output side.

4. A hydrostatic transmission according to claim 3,
characterised in that,
the swash plate (71) of the motor (3) is a substantially parallel plate which is inserted in a seat formed on a support part (86) inserted in the base of the recess (85).

5. A hydrostatic transmission according to claim 3 or 4,
characterised in that,
the control part (76) is bounded axially between the output side end wall (56) of the housing (4) and a shoulder surface (94) of the cylinder block (22).

6. A hydrostatic transmission according to any one of claims 3 to 5,
characterised in that,
the control part (76) is supported radially on an inner peripheral surface of the cylinder block (22).

7. A hydrostatic transmission according to claim 5 or 6,
characterised in that,
the control part (76) engages over at least one section of its width into the recess (85) in the cylinder block (22).

8. A hydrostatic transmission according to any one of claims 1 to 7,
characterised in that,
the inner end of the output shaft (81) is mounted in the cylinder block (22).

9. A hydrostatic transmission according to any one of claims 1 to 8,
characterised in that,
a free space (55) present between the output side end wall (56) and the cylinder block (22) serves as pressure chamber (53) of the pump (2).

10. A hydrostatic transmission according to any one of claims 1 to 9,
characterised in that,
the housing (4) is formed of two mutually centred pot-shaped housing parts (5, 6).

11. A hydrostatic transmission according to claim 10,
characterised in that,
the cylinder block (22) has a flange (38) with which it is held axially between the two housing parts (5, 6).

12. A hydrostatic transmission according to any one of claims 1 to 11,
characterised in that,
a supply line to the motor (3) is formed by a radial passage section (123) extending from the pressure chamber (53) and a passage section (110) in the control part (76) extending axially to the control slits, and a discharge line extends axially through the control part (76) into the output side end wall (56) and thence to a return line (114).

13. A hydrostatic transmission according to claim 12,
characterised in that,
the return line is formed by one or two return passages (98, 98.1, 98.2) extending in the wall of the housing (4).

14. A hydrostatic transmission according to any one of claims 1 to 13,
characterised in that,
the supply and discharge lines of the motor (3) can each be connected by a reversing or change-over valve (101) with, as desired, the pressure chamber (53) or either with a return passage (98, 98.1, 98.2) leading to the pump (2) or with a tank (117).

15. A hydrostatic transmission according to claim 14,
characterised in that,
the change-over valve (101) has a piston slide (102), preferably having two control pistons (103, 104), which can be displaced in a guide bore (105) extending in the output side end wall (56) of the housing (4) transverse to and spaced from the longitudinal middle axis (37) of the housing (4) and being connectable, in the region between the control pistons (103, 104), with the pressure chamber (53) by means of a passage (107) or with in each case a supply or discharge line (108) and a return passage (98.1, 98.2) on both sides of this passage (107).

16. A hydrostatic transmission according to any one of claims 1 to 15,
characterised in that,
an adjustable throttle (112) is arranged in the supply line (58, 114) of the pump (2) or in the return passage (98, 98.1, 98.2) connecting the motor (3) to the pump (2).

17. A hydrostatic transmission according to claim 16,
characterised in that,
the adjustable throttle (112) is part of a screw-down valve or a screw-down cartridge.

18. A hydrostatic transmission according to any one of claims 1 to 17,
characterised in that,
the inlet valves (45) of the pump (2) are formed each by a passage extending in the associated piston (19) at first axially from the front face thereof and then radially and opening outside the wall of the piston bore (21) in the retracted position of the piston (19).

19. A hydrostatic transmission according to any one of claims 1 to 18,
characterised in that,
the outlet valves (46) each comprise a passage (57) extending from the associated cylinder (47) and issuing radially at a cylindrical surface (49), with a non-extensible but elastically flexible flat valve ring (48) arranged with radial clearance within or outside of the cylindrical surface (49).

20. A hydrostatic transmission according to claim 19,
characterized in that,
the cylindrical surface (49) is a stepped outer surface spaced radially from the inner wall of the housing (4) and the valve ring (48) is axially held with lateral play for movement and passage between the stepped surface by a securing element (52) inserted in the cylindrical outer surface (49).

## Revendications

1. Transmission hydrostatique (1) avec une pompe à pistons commandée par des soupapes, en particulier une pompe (2) à pistons axiaux à laquelle sont associés dans un même boîtier (4) une pièce d'entraînement (14) entraînée en rotation par un arbre moteur (9) ainsi qu'un bloc à cylindres (22) stationnaire avec des pistons (19), et avec un moteur à pistons, en particulier un moteur (3) à pistons axiaux, relié à la pompe (2) par au moins une conduite hydraulique (98),
**caractérisée** en ce que le moteur (3) présente une pièce d'entraînement (71) non rotative ainsi qu'un barillet à cylindres rotatif (72) et est intégré dans le boîtier (4) sur le côté opposé à la pièce d'entraînement (14) de la pompe (2), le barillet à cylindres (72) étant monté solidaire en rotation sur un arbre de sortie (81) et étant disposé au moins partiellement dans un évidement (85) du bloc à cylindres (22) de la pompe (2).

2. Transmission hydrostatique selon la revendication 1, caractérisée en ce que le moteur (3) est un moteur à pistons axiaux avec un plateau oblique (71) dont l'inclinaison est invariable.

3. Transmission hydrostatique selon la revendication 2, caractérisée en ce que le plateau oblique (71) du moteur (3) est inséré dans le fond de l'évidement (85) et qu'une pièce de commande (76) du moteur (3) est disposée sur la paroi frontale (56) du boîtier (4) située sur le côté de sortie de l'entraînement.

4. Transmission hydrostatique selon la revendication 3, caractérisée en ce que le plateau oblique (71) du moteur (3) est une plaque essentiellement parallèle qui est insérée dans une selle ménagée sur une pièce d'appui (86) insérée dans le fond de l'évidement (85).

5. Transmission hydrostatique selon la revendication 3 ou 4, caractérisée en ce que la pièce de commande (76) est limitée axialement entre la paroi frontale (56) du boîtier (4) située sur le côté de sortie de l'entraînement et une surface d'un épaulement (94) du bloc à cylindres (22).

6. Transmission hydrostatique selon une des revendications 3 à 5, caractérisée en ce que la pièce de commande (76) est appuyée radialement sur une surface périphérique interne du bloc à cylindres (22).

7. Transmission hydrostatique selon la revendication 5 ou 6, caractérisée en ce que la pièce de commande (76) est montée, sur au moins une section de sa largeur, dans l'évidement (85) dans le bloc à cylindres (22).

8. Transmission hydrostatique selon une des revendications 1 à 7, caractérisée en ce que l'extrémité intérieure de l'arbre de sortie (81) repose dans un palier dans le bloc à cylindres (22).

9. Transmission hydrostatique selon une des revendications 1 à 8, caractérisée en ce qu'un espace libre (55) présent entre la paroi frontale (56) située sur le côté de sortie et le bloc à cylindres (22) sert de chambre à pression (53) de la pompe (2).

10. Transmission hydrostatique selon une des revendications 1 à 9, caractérisée en ce que le boîtier (4) est constitué de deux parties (5, 6) de boîtier en forme de pots, centrées l'une sur l'autre.

11. Transmission hydrostatique selon la revendication 10, caractérisée en ce que le bloc à cylindres (22) présente un flasque (38) au moyen duquel il est maintenu axialement entre les parties (5, 6) du boîtier.

12. Transmission hydrostatique selon une des revendications 1 à 11, caractérisée en ce qu'une conduite d'alimentation du moteur (3) est constituée par un tronçon de canal (123) radial partant de la chambre de pression (53) et par un tronçon de canal (110) s'étendant dans la pièce de commande (76) axialement par rapport aux fentes de commande, et qu'une conduite d'évacuation s'étend axialement à travers la pièce de commande (76) dans la paroi frontale (56) sur le côté de sortie de l'arbre du moteur et s'étend ensuite jusqu'à une conduite de retour (114).

13. Transmission hydrostatique selon la revendication 12, caractérisée en ce que la conduite de retour est constituée par un ou deux canaux de retour (98, 98.1 et 98.2) s'étendant dans la paroi du boîtier (4).

14. Transmission hydrostatique selon une des revendications 1 à 13, caractérisée en ce que les conduites d'admission et d'échappement du moteur (3) peuvent être reliées sélectivement par une vanne d'inversion (101) à la chambre de pression (53) ou, soit à un canal de retour (98, 98.1, 98.2) allant à la pompe (2), soit à un réservoir (117).

15. Transmission hydrostatique selon la revendication 14, caractérisée en ce que la vanne d'inversion (101) présente un tiroir à pistons (102) avec, de préférence, deux pistons de commande (103, 104), lequel tiroir est coulissant dans un alésage de guidage (105) s'étendant à une certaine distance de l'arbre longitudinal médian (37) du boîtier (4) dans la paroi frontale (56) de ce boîtier située sur le côté de sortie, cet alésage pouvant être relié dans la zone entre les pistons de commande (103, 104) par un canal (107) à la chambre de pression (53) ou à une conduite d'alimentation ou d'échappement (108) de part et d'autre de ce canal (107) et à un canal de retour (98.1, 98.2).

16. Transmission hydrostatique selon une des revendications 1 à 15, caractérisée en ce qu'une soupape d'étranglement réglable (112) est disposée dans la conduite d'alimentation (58, 114) de la pompe ou dans le canal de retour (98, 98.1, 98.2) reliant le moteur (3) à la pompe (2).

17. Transmission hydrostatique selon la revendication 16, caractérisée en ce que la soupape d'étranglement réglable (112) fait partie d'une soupape insérée par vissage ou d'une cartouche insérée par vissage.

18. Transmission hydrostatique selon une des revendications 1 à 17, caractérisée en ce que les soupapes d'admission (45) de la pompe (2) sont constituées chacune par un canal s'étendant dans le piston (19) afférent à partir de la surface frontale de ce piston, s'étendant tout d'abord axialement dans ce piston et s'étendant ensuite radialement, en débouchant, dans la position finale de rétraction du piston (19), hors de la paroi de l'alésage (21) du piston.

19. Transmission hydrostatique selon une des revendications 1 à 18, caractérisée en ce que les soupapes d'échappement (46) sont constituées chacune par un canal (57) partant du cylindre (47) afférent, se terminant radialement sur une surface cylindrique (49), une bague de soupape (48) plate, non expansible mais flexible élastiquement, étant disposée avec du jeu radial à l'intérieur ou à l'extérieur de la surface cylindrique (49).

20. Transmission hydrostatique selon la revendication 19, caractérisée en ce que la surface cylindrique (49) est une surface extérieure en gradin disposée à une certaine distance radiale de la paroi interne du boîtier (4) et en ce que la bague de soupape (48) est maintenue axialement avec un jeu de mouvement latéral et un jeu de passage sur la surface en gradin au moyen d'un élément de retenue (52) inséré dans la surface extérieure cylindrique (49).
